# EUROPÄISCHE PATENTSCHRIFT

(11) **EP 3 542 150 B1**
(45) Veröffentlichungstag und Bekanntmachung des Hinweises auf die Patenterteilung: **27.07.2022**
(21) Anmeldenummer: 17781484.5
(22) Anmeldetag: 10.10.2017
(51) Int. Cl.: G01N 23/207, G01N 23/223, G01T 1/20, G01F 23/288

(54) **VERFAHREN ZUR BESTIMMUNG EINER RESTBETRIEBS-ZEITDAUER EINER DETEKTOR-EINHEIT**
METHOD FOR DETERMINING A REMAINING OPERATING PERIOD OF A DETECTOR UNIT
PROCÉDÉ D'ÉTABLISSEMENT DE DURÉE DE TEMPS DE FONCTIONNEMENT RÉSIDUEL D'UNE UNITÉ DE DÉTECTEUR

(30) Priorität: 16.11.2016 DE 102016122048
(43) Veröffentlichungstag der Anmeldung: 25.09.2019
(73) Patentinhaber: Endress+Hauser SE+Co. KG, 79689 Maulburg (DE)
(72) Erfinder: DAMM, Hartmut, 79331 Teningen (DE); JIANG, Mingzheng, 79585 Steinen (DE); NZITCHIEU GADEU, Narcisse Michel, 79689 Maulburg (DE); WEIDENBRUCH, Simon, 79541 Lörrach (DE)
(74) Vertreter: Andres, Angelika Maria
(86) Internationale Anmeldenummer: PCT/EP2017/075855
(87) Internationale Veröffentlichungsnummer: WO 2018/091206

(56) Entgegenhaltungen:
- EP-A1- 2 237 073
- DE-A1- 4 202 142
- DE-A1- 10 048 559

## Beschreibung

Die Erfindung betrifft ein Verfahren zur Bestimmung einer Restbetriebs-Zeitdauer einer Detektor-Einheit für ein radiometrisches Dichte- oder Füllstandsmessgerät, sowie eine zur Ausführung dieses Verfahrens geeignete Detektor-Einheit.

In der Automatisierungstechnik, insbesondere in der Prozessautomatisierungstechnik, werden vielfach Feldgeräte eingesetzt, die zur Erfassung und/oder zur Beeinflussung von Prozessvariablen dienen. Zur Erfassung von Prozessvariablen werden Sensoren eingesetzt, die beispielsweise in Füllstandsmessgeräten, Durchflussmessgeräten, Druck- und Temperaturmessgeräten, pH-Redoxpotential-Messgeräten, Leitfähigkeitsmessgeräten, usw. zum Einsatz kommen. Sie erfassen die entsprechenden Prozessvariablen, wie Füllstand, Durchfluss, Druck, Temperatur, pH-Wert, Redoxpotential oder Leitfähigkeit. Zur Beeinflussung von Prozessvariablen dienen Aktoren, wie unter Anderem Ventile oder Pumpen, über die der Durchfluss einer Flüssigkeit in einem Rohrleitungsabschnitt bzw. der Füllstand in einem Behälter geändert werden kann. Unter dem Begriff "Behälter" werden im Rahmen der Erfindung auch nicht-abgeschlossene Behältnisse, wie beispielsweise Becken, Seen oder fließende Gewässer verstanden. Allgemein werden auch all diejenigen Geräte als Feldgeräte bezeichnet, die prozessnah eingesetzt werden und die prozessrelevante Informationen liefern oder verarbeiten. Daher werden im Zusammenhang mit der Erfindung unter Feldgeräten zusätzlich auch Remote I/Os, Funkadapter bzw. allgemein elektronische Komponenten verstanden, die auf der Feldebene angeordnet sind. Eine Vielzahl dieser Feldgeräte wird von der Firma Endress + Hauser hergestellt und vertrieben.

Im Fall von Dichte- oder Füllstandsmessungen werden oftmals Feldgeräte eingesetzt, deren Messmethode auf Radiometrie basiert. Bei dieser Messmethode wird radioaktive Strahlung (beispielsweise Gamma-Strahlung einer Cäsium- oder Kobalt-Quelle) genutzt, die von einer radioaktiven Strahlungsquelle ausgesendet und durch den Behälter mit dem zu messenden Medium geleitet wird. Nach Durchgang durch den Behälter wird die transmittierte Strahlungsintensität von einer Detektor-Einheit erfasst. Durch die Auswertung des Detektorsignals wird der transmittierte Anteil der ausgesandten Strahlungsintensität bestimmt. Auf Basis dessen wird auf die Dichte oder den Füllstand des Mediums geschlossen.

Der transmittierte Anteil der radioaktiven Strahlungsleistung kann nach Durchgang durch den Behälter nicht direkt detektiert werden. Die radioaktive Strahlung muss durch ein hierfür geeignetes Material zuerst in elektromagnetische Strahlung im optischen Spektralbereich umgewandelt werden, bevor die Strahlungsleistung von einem Photomultiplier (oder alternativ einer oder mehrerer Avalanche-Photodioden) innerhalb der Detektor-Einheit detektiert werden kann. Materialien, die diese Eigenschaft aufweisen, werden als szintillierende Materialien bezeichnet. Unter anderem Polystyrol weist diese szintillierende Eigenschaft auf. Erst die im optischen Spektralbereich liegende Strahlung kann vom Photomultiplier oder detektiert werden.

Aus dem Stand der Technik sind radiometrische Füllstands- oder Dichtemessgeräte bereits bekannt. Das grundlegende Funktionsprinzip ist beispielsweise in der Patentschrift EP 2 208 031 B1 beschrieben. Dieses Messprinzip hat sich im Fall von Dichte-Bestimmung insbesondere für Medien mit hoher Dichte bewährt, die nicht rein flüssiger oder gasförmiger Natur sind, sondern auch hohe Anteile an Feststoffen beinhalten, wie zum Beispiel Schlämme, Öle oder hochviskose Medien im Allgemeinen. Bei Füllstandsmessungen kann es sich bei dem Medium sogar um feste Schüttgüter wie Kies, Sand oder Saatgut handeln.

Entsprechend dieser Anwendungsgebiete befinden sich die Einsatzorte radiometrischer Füllstands- oder Dichtemessgeräte in der Regel an schwer zugänglichen oder sogar explosionsgefährdeten Orten. Daneben erfordern Wartungsmaßnahmen an diesen Messgeräten häufig eine gewisse Vorlaufzeit, um Austauschteile oder aktualisierte Software rechtzeitig bereitzustellen. Daher ist es gerade im Rahmen der Wartung erstrebenswert, erforderliche Wartungsarbeiten möglichst frühzeitig im Voraus zu erkennen, um die hierfür notwendigen Wartungsmaßnahmen weitestgehend im Voraus und gezielt planen zu können.

EP 2 237 073 A1 offenbart eine Vorrichtung zur Überwachung einer automatischen Driftkompensation eines Szintillationszählers nach dem Stand der Technik.

Der Erfindung liegt daher die Aufgabe zugrunde, ein Verfahren bereitzustellen, mit dem anfallende Wartungsmaßnahmen an radiometrischen Füllstands-oder Dichtemessgeräten im Voraus erkannt werden können.

Die Erfindung löst diese Aufgabe durch ein Verfahren zur Bestimmung einer Restbetriebs-Zeitdauer (Δt_{B,r}) einer Detektor-Einheit für ein radiometrisches Dichte- oder Füllstandsmessgerät, bei dem die Detektor-Einheit zumindest einen Photomultiplier mit einem regelbaren Verstärkungsfaktor (A) und eine Regel-Auswerte-Einheit umfasst, und bei dem die Regel-Auswerte-Einheit den Photomultiplier derart mittels einer Regelspannung (Vₐ) regelt, dass der Verstärkungsfaktor (A) in etwa konstant ist (dies kann beispielsweise mittels des Verfahrens erfolgen, welches in der Auslegeschrift P 18 09 520.0 des Deutschen Patentamts beschrieben ist). Das erfindungsgemäße Verfahren umfasst folgende Verfahrensschritte:
- Aufzeichnen der Regelspannung (Vₐ) über zumindest einen vorbestimmten Zeitraum (dt),
- ermitteln einer zeitlichen Änderungsfunktion (dVₐ/dt) anhand der während des vorbestimmten Zeitraums (dt) aufgezeichneten Regelspannung (Vₐ),
- berechnen der Restbetriebs-Zeitdauer (Δt_{B,r}) bis zum Erreichen einer maximalen Regelspannung (V_{a,max}) mittels der zeitlichen Änderungsfunktion (dVₐ/dt) und der aktuellen Regelspannung (V_{a,a}), die zu der aktuellen Betriebszeit (t_{B,a}) vorherrscht.

Durch das erfindungsgemäße Verfahren wird die Möglichkeit eröffnet, die Restbetriebs-Zeitdauer (Δt_{B,r}) der Detektor-Einheit zu approximieren und somit rechtzeitig in Erfahrung zu bringen, bis zu welchem Zeitpunkt die erforderlichen Wartungsmaßnahmen, insbesondere der alterungsbedingte Austausch des Photomultipliers, durchgeführt werden müssen. Solch ein Vorgehen im Allgemeinen ist auch unter dem Begriff "Predictive Maintenance" bekannt. Dabei ist die Reihenfolge der Verfahrensschritte nicht auf die oben genannte Reihenfolge beschränkt. Vielmehr ist es erfindungsgemäß auch möglich, dass die einzelnen Verfahrensschritte zumindest teilweise simultan ausgeführt werden. Darüber hinaus kann das Verfahren auch (zyklisch) wiederholend angewendet werden, um die berechnete Restbetriebs-Zeitdauer (Δt_{B,r}) stets zu aktualisieren.

Vorzugsweise wird die Änderungsfunktion (dVₐ/dt), welche den zeitlichen Verlauf der Regelspannung (Vₐ) analytisch beschreibt, über den vorbestimmten Zeitraum (dt) mittels einer Regression der Regelspannung (Vₐ) ermittelt. Dabei kann der mathematische Typ der Änderungsfunktion (dVₐ/dt), also bspw. eine Geraden- Logarithmus- oder sonstige Funktion, fest vorgegeben werden. Es kann aber auch vom zeitlichen Verlauf der Regelspannung (Vₐ) innerhalb des vorbestimmten Zeitintervalls (dt) abhängig gemacht werden, welcher mathematische Typ auf die Änderungsfunktion (dVₐ/dt) angewendet wird. Dementsprechend kann zur Durchführung der Regression und/oder zur Ermittlung eines geeigneten mathematischen (Regressions-)Typs insbesondere die Methode der kleinsten Quadrate angewendet werden.

Bei dieser Auslegung des erfindungsgemäßen Verfahrens besteht eine zusätzliche Weiterentwicklung darin, dass eine Meldung erstellt wird, wenn sich zumindest ein Parameter der Änderungsfunktion (dVₐ/dt) über einen vordefinierten Grenzwert hinaus verändert, oder wenn sich der Regressionstyp der Änderungsfunktion (dVₐ/dt) ändert.

Vorteilhaft ist es im Rahmen der Erfindung außerdem, wenn die Regelspannung (Vₐ) temperaturkompensiert (also korrigiert auf eine Standardtemperatur) aufgezeichnet wird, da die Umgebungstemperatur neben der Alterung des Photomultipliers eine weitere unerwünschte Einflussgröße auf den Verstärkungsfaktor (A) des Photomultipliers darstellt.

Erfindungsgemäß gibt es verschiedene Möglichkeiten, den vorbestimmten Zeitraum (dt), über den die Regelspannung (Vₐ) aufgezeichnet wird, zu wählen: Eine erste Möglichkeit besteht darin, dass sich der vorbestimmte Zeitraum (dt) über die gesamte bisherige Betriebszeit (t_{B}) (oder eine definierte Mindestbetriebszeit) der Detektor-Einheit (1) bis hin zur aktuellen Betriebszeit (t_{B,a}) erstreckt. In diesem Fall verlängert sich dieser Zeitraum (dt) mit fortlaufender Betriebszeit (t_{B,a}) des Photomultipliers, so dass die Entwicklung des Verstärkungsfaktors (A) über die gesamte bisherige Betriebszeit miteinbezogen wird. Alternativ hierzu ist es erfindungsgemäß außerdem möglich, dass der vorbestimmte Zeitraum (dt) immer konstant lang gewählt ist und sich somit nicht mit fortlaufender Betriebszeit (t_{B}) verlängert. In diesem Fall ist es vorteilhaft, wenn der konstant lange vorbestimmte Zeitraum (dt) mit der aktuellen Betriebszeit (t_{B,a}) endet, so dass jeweils nur die aktuelle Entwicklung des Verstärkungsfaktors (A) direkt vor der aktuellen Betriebszeit (t_{B,a}) zur Berechnung der Restbetriebs-Zeitdauer (Δt_{B,r}) herangezogen wird.

Im Rahmen der Erfindung sind etwaige Zeitintervalle, in deren Abständen die Regelspannung (Vₐ) aufgezeichnet wird, nicht fest vorgeschrieben. Zwecks Reduktion des aufgezeichneten Datensatzes ist es jedoch vorteilhaft, wenn das Aufzeichnen der Regelspannung (Vₐ) zumindest innerhalb der vorbestimmten Zeitdauer (dt) in vordefinierten Zeitintervallen, die insbesondere größer als einem Tag sind, durchgeführt wird.

Die Aufgabe, die der Erfindung zugrunde liegt, wird weiterhin durch eine Detektor-Einheit für ein radiometrisches Dichte- oder Füllstandsmessgerät gelöst, das zur Ausführung des in zumindest einem der vorhergehenden Ansprüche beschriebenen Verfahrens geeignet ist. Dementsprechend umfasst dieses radiometrische Dichte- oder Füllstandsmessgerät:
- Einen Szintillator,
- einen optisch mit dem Szintillator gekoppelten Photomultiplier mit einem regelbaren Verstärkungsfaktor (A), und
- eine Regel-Auswerte-Einheit.

Hierbei bietet es sich in einer vorteilhaften Ausgestaltung der erfindungsgemäßen Detektor-Einheit an, dass die Regel-/Auswerte-Einheit zusätzlich das Aufzeichnen der Regelspannung (Vₐ) und/oder das Ermitteln einer zeitlichen Änderungsfunktion (dVₐ/dt) und/oder das Berechnen der Restbetriebszeitdauer (Δt_{B,r}) durchführt. Demensprechend könnte in diesem Fall eine etwaige Zusatz-Recheneinheit für diese Berechnungen eingespart werden. Des Weiteren bietet es sich vorteilhaft an, wenn die Detektor-Einheit zur Anzeige der Restbetriebs-Zeitdauer (Δt_{B,r}) eine entsprechende Anzeige-Einheit umfasst. Alternativ oder zusätzlich hierzu wäre es natürlich auch denkbar, dass die Detektor-Einheit die berechnete Restbetriebs-Zeitdauer (Δt_{B,r}) an eine übergeordnete Einheit, beispielsweise eine Prozessleitstelle (gegebenenfalls drahtlos) übermittelt. Hierdurch würde es möglich, die voraussichtliche Restbetriebs-Zeitdauer (Δt_{B,r}) per Ferndiagnose zu überwachen.

Die Erfindung wird anhand der zwei nachfolgenden Figuren erläutert. Es zeigt:
Fig. 1: eine Anordnung einer erfindungsgemäßen Detektor-Einheit an einem Behälter, und
Fig. 2: eine schematisches Diagramm zur erfindungsgemäßen Berechnung der Restbetriebs-Zeitdauer (Δt_{B,r}).

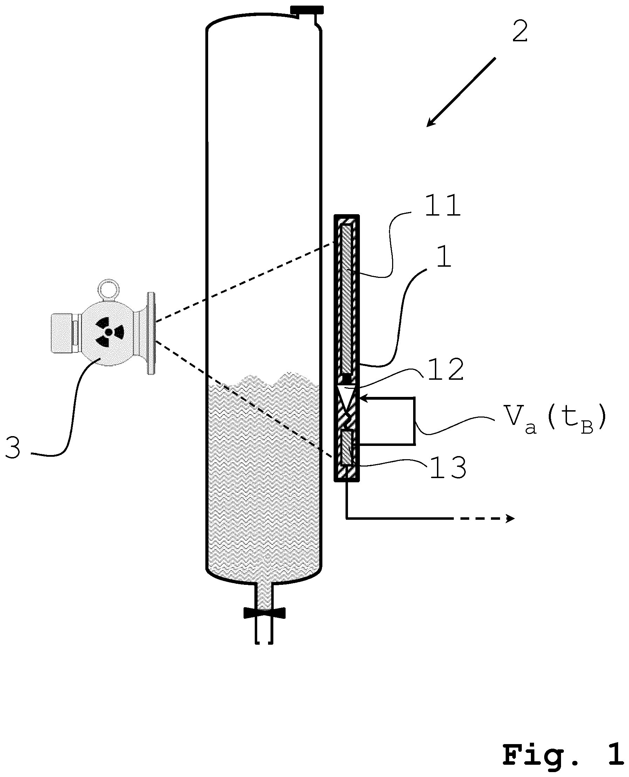

In Fig. 1 ist eine erfindungsgemäße Detektor-Einheit 1 eines radiometrischen Dichte- oder Füllstandsmessgerätes 2 dargestellt. Neben der Detektor-Einheit 1 umfasst das Dichte- oder Füllstandsmessgerät 2 eine radioaktive Strahlungsquelle 3. Anhand von Fig. 1 wird ersichtlich, wie das radiometrische Dichte- oder Füllstandsmessgerät 2 typischerweise an einem Behälter mit einem Füllgut, dessen Füllstand oder Dichte zu bestimmen ist, angeordnet ist:
Die Strahlungsquelle 3 ist so angebracht, dass es radioaktive Strahlung in Richtung des Behälters mit dem zu messenden Füllgut sendet. Im Falle von Füllstandsmessung wird die radioaktive Strahlung in Abhängigkeit des Füllstands verschieden stark absorbiert, so dass sich nach Durchgang durch den Behälter an der Detektor-Einheit 1 eine entsprechende Intensität der radioaktiven Strahlung einstellt. Korrespondierend hierzu ist die Detektor-Einheit 1 in Bezug zur der Strahlungsquelle 3 in etwa auf der gegenüberliegenden Seite des Behälters angeordnet, so dass sie sich grob im Zentrum des Strahlungskegels der Strahlungsquelle 3 befindet. Im Falle von Dichtemessung ergibt sich die Strahlungsintensität an der Detektor-Einheit 1 anhand der Dichte des jeweiligen Füllgutes (zumindest bei senkrecht angeordneten Behältnissen ist hierfür die Voraussetzung, dass im Fall von nicht-gasförmigem Füllgut der Füllstand die Höhe übersteigt, auf der die Strahlungsquelle 3 bzw. die Detektor-Einheit 1 angeordnet sind).

Die Detektor-Einheit 1 umfasst einen Szintillator 11 zum Empfang der radioaktiven Strahlung und zu deren Umwandlung in Licht im optischen- oder nahen Infrarot-Bereich. Zur Transmission des Lichts ist der Szintillator 11 (beispielsweise über ein hierfür transparentes Fenster) an einen Photomultiplier 12 gekoppelt. Über eine (in Bezug zum Szintillator 11) rückseitig am Photomultiplier 12 angeordnete Regel-Auswerte-Einheit 13 wird zum einen die am Photomultiplier 12 eingehende Lichtleistung ausgewertet. Zum anderen regelt die Regel-Auswerte-Einheit 13 den Verstärkungsfaktor A des Photomultipliers 12 mittels einer Regelspannung Vₐ, welche mehrere hundert Volt bis zu über einem kV betragen kann. Dabei ist der Verstärkungsfaktor A des Photomultipliers 12 derjenige Faktor, mit dem die am Photomultiplier 12 eingehende Lichtleistung in eine elektrische Ausgangsleistung verstärkt wird. Die Regelung des Photomultipliers 12 mittels der Regelspannung (Vₐ) erflog derart, dass der Verstärkungsfaktor (A) über die Betriebszeit t_{B} der Detektor-Einheit 1 möglichst konstant gehalten wird (abgesehen von einer eventuellen zusätzlichen Kompensation des Temperatureffektes).

Zur elektrischen Kontaktierung der Detektor-Einheit 1 ist die Regel-Auswerte-Einheit 13 zudem (beispielsweise über einen elektrischen Kabelanschluss, wie einen mehrpoligen Stecker) mit einer übergeordneten Einheit, beispielsweise einem Prozessleitstand verbindbar.

Je nach Einsatzgebiet ist es notwendig, dass die Detektor-Einheit 1 gewisse Explosionsschutzvorgaben einzuhalten hat. Dies kann beispielsweise durch Kapselung der Detektor-Einheit 1 mittels eines entsprechenden Druckgehäuses (insbesondere gemäß der Normenreihe EN 60079-1 erfolgen.

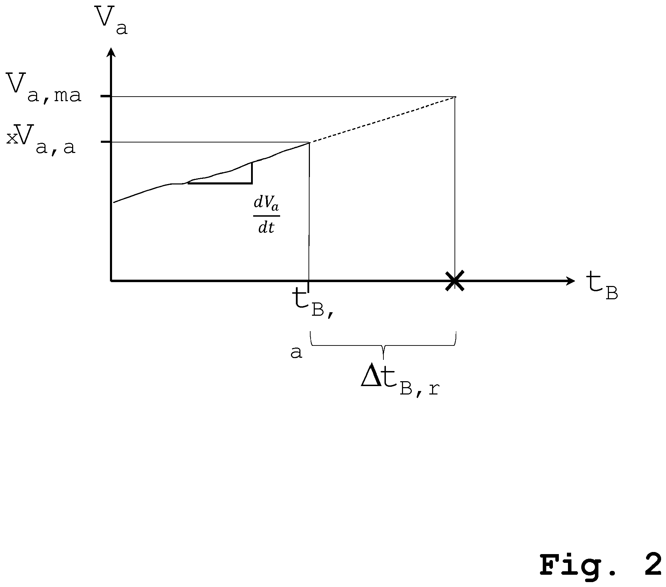

Aus dem Diagramm, das in Fig. 2 dargestellt ist, wird das erfindungsgemäße Verfahren veranschaulicht, mittels dem die voraussichtliche Restbetriebs-Zeitdauer Δt_{B,r} der Detektor-Einheit 1 (ausgehend von dessen momentaner Betriebszeit t_{B,a}) berechnet werden kann: Die Abszisse des Diagramms stellt die fortschreitende Betriebszeit t_{B} der Detektor-Einheit 1 dar, auf der Ordinate ist die jeweils erforderliche Regelspannung Vₐ aufgetragen. Wie aus dem Diagramm hervorgeht, muss die Regelspannung Vₐ der Regel-Auswerte-Einheit 13 mit steigender Betriebszeit t_{B} erhöht werden, um den Verstärkungsfaktor A des Photomultipliers 12 konstant zu haltenden. Der Grund dafür ist dessen Alterungsverhalten. An den Photomultiplier 12 darf jedoch höchstens eine maximale Regelspannung V_{a,max} angelegt werden. Dies kann zum einen durch den Photomultiplier 12 selbst bedingt sein. Zum anderen kann diese Begrenzung jedoch auch durch einzuhaltende Explosionsschutzvorgaben hervorgerufen werden.

Erfindungsgemäß wird im Verlauf der Betriebszeit t_{B} über einen vordefinierten Zeitraum dt die Regelspannung Vₐ aufgezeichnet. Daraufhin wird eine zeitliche Änderungsfunktion dVₐ/dt anhand der Regelspannung Vₐ, die während des vorbestimmten Zeitraums dt aufgezeichnet wurde, ermittelt. Beides erfolgt bei dem in Fig. 1 gezeigten Ausführungsbeispiel durch die Regel-Auswerte-Einheit 13. In dem schematischen Diagramm von Fig. 2 erfolgt die Ermittlung der Änderungsfunktion dVₐ/dt auf Basis einer linearen Regression der aufgezeichneten Regelspannung Vₐ. Die so erhaltene Änderungsfunktion dVₐ/dt wird unter Einbezug der aktuellen Regelspannung V_{a,a} angewendet, um eine voraussichtliche Restbetriebs-Zeitdauer Δt_{B,r} bis zum Erreichen der maximalen Regelspannung V_{a,max} zu berechnen.

### Bezugszeichenliste

- 1: Detektor-Einheit
- 2: Dichte- oder Füllstandsmessgerät
- 3: Strahlenquelle
- 11: Szintillator
- 12: Photomultiplier
- 13: Regel-Auswerte-Einheit
- A: Verstärkungsfaktor
- dt: Zeitraum
- dVₐ/dt: Änderungsfunktion
- Vₐ: Regelspannung
- V_{a,a}: Momentane Regelspannung
- V_{a,max}: Maximale Regelspannung
- t_{B}: Betriebszeit
- t_{B,a}: Momentane Betriebszeit
- Δt_{B,r}: Restbetriebs-Zeitdauer

## Patentansprüche

1. Verfahren zur Bestimmung einer Restbetriebs-Zeitdauer (Δt_{B,r}) einer Detektor-Einheit (1) für ein radiometrisches Dichte- oder Füllstandsmessgerät (2), wobei die Detektor-Einheit (1) zumindest einen Photomultiplier (12) mit einem regelbaren Verstärkungsfaktor (A) und eine Regel-Auswerte-Einheit (13) umfasst, und wobei die Regel-Auswerte-Einheit (13) den Photomultiplier (12) derart mittels einer Regelspannung (Vₐ) regelt, dass der Verstärkungsfaktor (A) in etwa konstant ist, **das durch die folgenden Verfahrensschritte gekennzeichnet ist:**
- Aufzeichnen der Regelspannung (Vₐ) über zumindest einen vorbestimmten Zeitraum (dt),
- ermitteln einer zeitlichen Änderungsfunktion (dVₐ/dt) anhand der während des vorbestimmten Zeitraums (dt) aufgezeichneten Regelspannung (Vₐ),
- berechnen der Restbetriebs-Zeitdauer (Δt_{B,r}) bis zum Erreichen einer maximalen Regelspannung (V_{a,max}) mittels der zeitlichen Änderungsfunktion (dVₐ/dt) und der aktuellen Regelspannung (V_{a,a}), die zu der aktuellen Betriebszeit (t_{B,a}) vorherrscht.

2. Verfahren nach Anspruch 1, wobei die Änderungsfunktion (dVₐ/dt) mittels einer Regression der Regelspannung (Vₐ) über den vorbestimmten Zeitraum (dt) ermittelt wird.

3. Verfahren nach Anspruch 2, wobei zur Durchführung der Regression und/oder zur Ermittlung eines geeigneten Regressionstyps die Methode der kleinsten Quadrate angewendet wird.

4. Verfahren nach Anspruch 1, 2 oder 3, wobei die Regelspannung (Vₐ) temperaturkompensiert aufgezeichnet wird.

5. Verfahren nach zumindest einem der Ansprüche 1 bis 4, wobei sich der vorbestimmte Zeitraum (dt) über die gesamte Betriebszeit der Detektor-Einheit (1) bis zur aktuellen Betriebszeit (t_{B,a}) erstreckt.

6. Verfahren nach zumindest einem der Ansprüche 1 bis 4, wobei der vorbestimmte Zeitraum (dt) konstant ist und mit der aktuellen Betriebszeit (t_{B,a}) endet.

7. Verfahren nach zumindest einem der vorhergehenden Ansprüche, wobei eine Meldung erstellt wird, wenn sich zumindest ein Parameter der Änderungsfunktion (dVₐ/dt) über einen vordefinierten Grenzwert hinaus verändert, oder wenn sich der Regressionstyp der Änderungsfunktion (dVₐ/dt) ändert.

8. Verfahren nach zumindest einem der vorhergehenden Ansprüche, wobei das Aufzeichnen der Regelspannung (Vₐ) zumindest innerhalb der vorbestimmten Zeitdauer (dt) in vordefinierten Zeitintervallen, insbesondere in Zeitintervallen von größer als einem Tag, durchgeführt wird.

9. Detektor-Einheit für ein radiometrisches Dichte- oder Füllstandsmessgerät (2), zur Ausführung des in zumindest einem der vorhergehenden Ansprüche beschriebenen Verfahrens, umfassend:
- Einen Szintillator (11),
- einen optisch mit dem Szintillator (11) gekoppelten Photomultiplier (12) mit einem regelbaren Verstärkungsfaktor (A), und
- eine Regel-Auswerte-Einheit (13).

10. Detektor-Einheit nach Anspruch 9, wobei die Regel-/Auswerte-Einheit (13) das Aufzeichnen der Regelspannung (Vₐ) und/oder das Ermitteln einer zeitlichen Änderungsfunktion (dVₐ/dt) und/oder das Berechnen der Restbetriebszeitdauer (Δt_{B,r}) durchführt.

11. Detektor-Einheit nach Anspruch 9 oder 10, umfassend:
- Eine Anzeige-Einheit zur Anzeige der Restbetriebs-Zeitdauer (Δt_{B,r}).

## Claims

1. Procedure to determine a remaining operating time (Δt_{B,r}) of a detector unit (1) for a radiometric density or level transmitter (2), wherein the detector unit (1) comprises at least a photomultiplier (12) with a controllable amplification factor (A) and a control/evaluation unit (13), and
wherein the control/evaluation unit (13) controls the photomultiplier (12) using a control voltage (Vₐ) in such a way that the amplification factor (A) is approximately constant, wherein said procedure is **characterized by** the following procedural steps:
- Recording of the control voltage (Vₐ) over at least a predefined period of time (dt),
- Determination of a temporal change function (dVₐ/dt) using the control voltage (Vₐ) recorded over the predetermined period of time (dt),
- Calculation of the remaining operation time (Δt_{B,r}) until a maximum control voltage (V_{a,max}) is reached using the temporal change function (dVₐ/dt) and the current control voltage (V_{a,a}) that is present at the current operating time (t_{B,a}).

2. Procedure as claimed in Claim 1, wherein the change function (dVₐ/dt) is determined by means of a regression of the control voltage (Vₐ) over the predetermined period of time (dt).

3. Procedure as claimed in Claim 2, wherein the least squares method is used to perform the regression and/or to determine an appropriate type of regression.

4. Procedure as claimed in Claim 1, 2 or 3, wherein the control voltage (Vₐ) is recorded with temperature compensation.

5. Procedure as claimed in one of the Claims 1 to 4, wherein the predetermined period (dt) extends over the entire operating time of the detector unit (1) up to the current operating time (t_{B,a})

6. Procedure as claimed in at least one of the Claims 1 to 4, wherein the predetermined period (dt) is constant and ends with the current operating time (t_{B,a}).

7. Procedure as claimed in at least one of the previous claims, wherein a message is generated if at least one parameter of the change function (dVₐ/dt) changes beyond a predefined limit value, or if the regression type of the change function (dVₐ/dt) changes.

8. Procedure as claimed in at least one of the previous claims, wherein the control voltage (Vₐ) is recorded at least during the predetermined duration (dt) at predefined intervals, particularly at intervals greater than one day.

9. Detector unit for a radiometric density or level transmitter to perform the procedure described in at least one of the previous claims, wherein said unit comprises:
- a scintillator (11),
- a photomultiplier (12) with a controllable amplification factor (A), wherein said photomultiplier is optically coupled with scintillator (11),
- a control/evaluation unit (13).

10. Detector unit as claimed in Claim 9, wherein the control/evaluation unit (13) records the control voltage (Vₐ) and/or determines a temporal change function (dVₐ/dt) and/or calculates the remaining operation time (Δt_{B,r}).

11. Detector unit as claimed in Claim 9 or 10, comprising:
- a display unit to display the remaining operation time (Δt_{B,r}).

## Revendications

1. Procédé destiné à la détermination d'une durée de fonctionnement restante (Δt_{B,r}) d'une unité de détection (1) pour un transmetteur radiométrique de mesure de densité ou de niveau (2), l'unité de détection (1) comprenant au moins un photomultiplicateur (12) avec un facteur d'amplification réglable (A) et une unité de régulation/d'exploitation (13), et
l'unité de régulation/d'exploitation (13) régulant le photomultiplicateur (12) au moyen d'une tension de régulation (Vₐ), de telle sorte que le facteur d'amplification (A) soit à peu près constant, lequel procédé est **caractérisé par** les étapes de procédé suivantes :
- Enregistrement de la tension de régulation (Vₐ) pendant au moins une période de temps prédéterminée (dt),
- Détermination d'une fonction de variation temporelle (dVₐ/dt) à l'aide de la tension de régulation (Vₐ) enregistrée pendant la période de temps prédéterminée (dt),
- Calcul de la durée de fonctionnement restante (Δt_{B,r}) jusqu'à ce qu'une tension de régulation maximale (V_{a,max}) soit atteinte au moyen de la fonction de variation temporelle (dVₐ/dt) et de la tension de régulation actuelle (V_{a,a}), qui prévaut pendant la durée de fonctionnement actuelle (t_{B,a}).

2. Procédé selon la revendication 1, pour lequel la fonction de variation (dVₐ/dt) est déterminée au moyen d'une régression de la tension de régulation (Vₐ) sur la période de temps prédéterminée (dt).

3. Procédé selon la revendication 2, pour lequel on utilise la méthode des moindres carrés pour effectuer la régression et/ou pour déterminer un type de régression approprié.

4. Procédé selon la revendication 1, 2 ou 3, pour lequel la tension de régulation (Vₐ) est enregistrée avec compensation de la température.

5. Procédé selon l'une des revendications 1 à 4, pour lequel la période prédéterminée (dt) s'étend sur toute la durée de fonctionnement de l'unité de détection (1) jusqu'à la durée de fonctionnement actuelle (t_{B,a})

6. Procédé selon au moins l'une des revendications 1 à 4, pour lequel la période prédéterminée (dt) est constante et se termine par le temps de fonctionnement actuel (t_{B,a}).

7. Procédé selon l'une des revendications précédentes, pour lequel un message est généré lorsqu'au moins un paramètre de la fonction de variation (dVₐ/dt) change au-delà d'une valeur limite prédéfinie, ou lorsque le type de régression de la fonction de variation (dVₐ/dt) change.

8. Procédé selon l'une des revendications précédentes, pour lequel l'enregistrement de la tension de régulation (Vₐ) est effectué au moins pendant la durée prédéterminée (dt) à des intervalles de temps prédéfinis, notamment à des intervalles de temps supérieurs à un jour.

9. Unité de détecteur destinée à un transmetteur radiométrique de densité ou de niveau en vue de la réalisation du procédé décrit dans au moins l'une des revendications précédentes, laquelle unité comprend :
- un scintillateur (11),
- un photomultiplicateur (12) avec un facteur d'amplification (A) réglable, lequel photomultiplicateur est couplé par voie optique avec le scintillateur (11),
- une unité de régulation/d'exploitation (13).

10. Unité de détecteur selon la revendication 9, pour lequel l'unité de régulation/d'exploitation (13) effectue l'enregistrement de la tension de régulation (Vₐ) et/ou la détermination d'une fonction de variation temporelle (dVₐ/dt) et/ou le calcul de la durée de fonctionnement restante (Δt_{B,r}).

11. Unité de détecteur selon la revendication 9 ou 10, comprenant :
- une unité d'affichage destinée à l'affichage de la durée de fonctionnement restante (Δt_{B,r}).
